# EUROPEAN PATENT SPECIFICATION

(11) **EP 2 817 971 B1**
(45) Date of publication and mention of the grant of the patent: **10.07.2019**
(21) Application number: 12711350.4
(22) Date of filing: 23.02.2012
(51) Int. Cl.: H04N 21/266, H04N 21/2662, H04L 29/06, H04L 29/08, H04N 21/24, H04N 21/61, H04N 21/643

(54) **NETWORK CONTROLLED STREAMING**
NETZWERKGESTEUERTES STREAMING
DIFFUSION EN CONTINU COMMANDÉ PAR RÉSEAU

(43) Date of publication of application: 31.12.2014
(73) Proprietor: Telefonaktiebolaget LM Ericsson (publ), 164 83 Stockholm (SE)
(72) Inventor: HUBER, Michael, S-17266 Sundyberg (SE)
(74) Representative: Brann AB
(86) International application number: PCT/EP2012/053108
(87) International publication number: WO 2013/123994

(56) References cited:
- WO-A1-2011/054377
- US-A1- 2009 028 328
- US-A1- 2011 082 924

## Description

### Technical field

The present application relates to a node in a content distribution network; a method performed in a node of a content distribution network.

### Background

HTTP Adaptive Bitrate Streaming (also known as Adaptive HTTP Streaming) is a technique used in streaming media over computer networks. While in the past most video streaming technologies utilized streaming protocols such as Real Time Streaming Protocol (RTSP) and Real-time Transport Protocol (RTP), today's adaptive streaming technologies are almost exclusively based on HTTP and designed to work efficiently over large distributed HTTP networks such as the Internet.

HTTP Adaptive Bitrate Streaming works by detecting both the available bandwidth in a connection to a device and the processing capacity of the device. This information is then used to select the quality of a media stream to be streamed to the device. This requires the media stream to be available for streaming in multiple versions at multiple bit rates. The media playing client in the device switches between streaming the different versions depending on available resources. HTTP Adaptive Bitrate Streaming is generally accepted to provide media streaming with limited stalling, and fast start time, thus providing a good user experience with both devices using a high capacity connection and those using low capacity connections.

One problem with HTTP Adaptive Bitrate Streaming is that it relies on the media playing client in the device to request the best available stream from a media server. This is done Over-The-Top (OTT) and so does not involve any signaling with the communications network. That is, the communications network merely provides the connection to the device. As a result, HTTP Adaptive Bitrate Streaming may fill all available bandwidth in the connection to the device, which may impact upon other devices and services competing for the same network bandwidth. This is in particular a problem for wireless communications networks, but can also affect wired communications networks such as networks providing home broadband (often operated by Internet Service Providers).

International patent application number PCT/EP2011/063300, titled "Shaping Media Streaming Traffic" and filed by Telefonaktiebolaget L M Ericsson (publ), describes a method in a communications network which allows a network to influence the bandwidth consumed by video streaming. A method described therein comprises receiving a manifest for adaptive streaming, the manifest sent from a media provider to a device via the communications network. The manifest describes media available for streaming from the media provider to the device. The method further comprises editing the manifest in the communications network to remove from it a reference to at least one version of media available for streaming before sending it to the device. By allowing the communications network to modify the manifest, the communications network is given a mechanism allowing it to control how much network bandwidth is used for media streaming.

United states patent application number US 2009/0028328 A1 describes forming a content stream with conditional access information and a content file. A communication system includes a content repository storing a content file and a video transport processing system in communication with the content repository. The video transport processing system receives a plurality of conditional access information, stores a relative time of arrival of each of the plurality of conditional access information and encrypts the content file using the plurality of conditional access information and the relative time of arrival to form an encrypted content file.

United states patent application number US 2011/0082924 A1 describes managing network traffic by editing a manifest file. This provides a technique for controlling the streaming of content through a network. The technique involves editing the manifest file that is used to implement an HTTP adaptive bit rate streaming protocol. For example, a manifest file is received at an intermediate network device in response to a request from a client for a content element, the manifest file is then edited at the intermediate network device, and then the edited manifest file is sent to the client. In an embodiment, editing the manifest file involves deleting and/or inserting a URI within the manifest file.

However, there remains a need for improved network controlled streaming. In particular, there is a need for a more efficient use of available bandwidth in a communications network that carries traffic comprising content streams.

### Summary

Multicasting is often used for the distribution of IPTV. Multicasting can be described as the distribution of streamed content to a group of destination devices simultaneously in a single transmission from a source server whereby copies are created automatically in network nodes, such as routers, only when the topology of the network requires it. Multicasting thus provides a more efficient use of network resources compared to, say, unicast, which requires a source server to transmit a content stream to each device individually.

One method disclosed herein is to feed back the numbers of client devices that are both connected to a single end point node and that are streaming a particular content from a server. With this information the server and/or the end point node can control the bandwidth (streaming quality) of the current multicasted channel sent to that node. If a bigger proportion of the client devices are connected to the same channel, the server and the node can slightly increase the quality and thereby also bandwidth for the service. This can be done in several quite different ways, but the basic idea is the same. If more people are watching the same thing, at the same time, then the network can safely increase the bandwidth for that service, since it is then less likely that the devices receiving that stream will use bandwidth for other services. Accordingly, there is provided a node in a content distribution network, the node arranged to distribute content to a plurality of clients, as further defined in claim 1.

When a plurality of clients simultaneously stream the same content, the quality of that content stream can be increased, and thus the bandwidth it consumes also increased, without unduly using the network bandwidth. This is particularly applicable where one content stream at high quality consumes no more network traffic than two different content streams at a standard quality. In practice the relative bandwidth consumption of standard quality and high quality streams is set dependent on network topology and expected usage.

The quality module may be arranged to increase the quality of streamed content by causing the node to switch to a higher quality version of the content stream it receives.

The quality module may be arranged to send a report of the number of clients streaming a content stream. The report may be sent to the content server or to another node.

The node may further comprise a receiver for receiving content to be distributed to a plurality of clients.

The node may further comprise a transmitter for transmitting content to a plurality of clients. The transmission may be via wired or wireless communication means.

The node may be a streaming server. The node may be a server connected to a streaming server. The node may be a base station of a wireless communications network. The node may be a streaming server or a control server connected to the streaming server. The node may be a base station in a wireless communications network, and where this is the case the client monitor may monitor all wireless communications terminals connected to the base station.

There is further provided a method, in a node of a content distribution network, the node arranged to distribute content to a plurality of clients, as further defined in claim 7.

The increase in the quality of streamed content may be facilitated by the node switching to a higher quality version of the content stream it receives.

The method may further comprise sending a report of the number of clients streaming a content stream.

The method may further comprise receiving content to be distributed to a plurality of clients. The method may further comprise transmitting content to a plurality of clients.

### Brief description of the drawings

A method and apparatus for network controlled adaptive streaming will now be described, by way of example only, with reference to the accompanying drawings, in which:
Figure 1 illustrates components of a content distribution network;
Figure 2 illustrates a distribution node as described herein;
Figure 3 illustrates a method as described herein; and
Figures 4a and 4b illustrate a practical example of the operation of the method and apparatus described herein.

### Detailed description

When media content such as TV is streamed over an IP network to multiple clients at the same time, Internet Group Management Protocol (IGMP) multicast is most commonly used. This establishes multicast group memberships and uses multicast to save bandwidth in the network. The same approach is now being used in wireless communications networks, but the differences between the physical channel characteristics means that the direct application of multicast does not give an optimal solution.

This document presents a method and apparatus to allow network control of streaming, whereby the greater the number of devices streaming content, the greater the quality of that content that is provided to the multicasting group. A device that is receiving a piece of content via streaming is unlikely to use much additional bandwidth, and it is highly unlikely the device will be receiving an additional stream of alternative content at the same time. As such, regardless of how a node distributes the bandwidth it has available to the devices under it, if multiple devices are receiving the same particular content stream then the node will have excess bandwidth available to serve the needs of the devices under it that are not receiving the particular content stream. This excess bandwidth can benefit the most users by being used not just to service the users not receiving the particular content stream, but also to stream the particular content stream at a higher quality (and so higher bitrate or bandwidth).

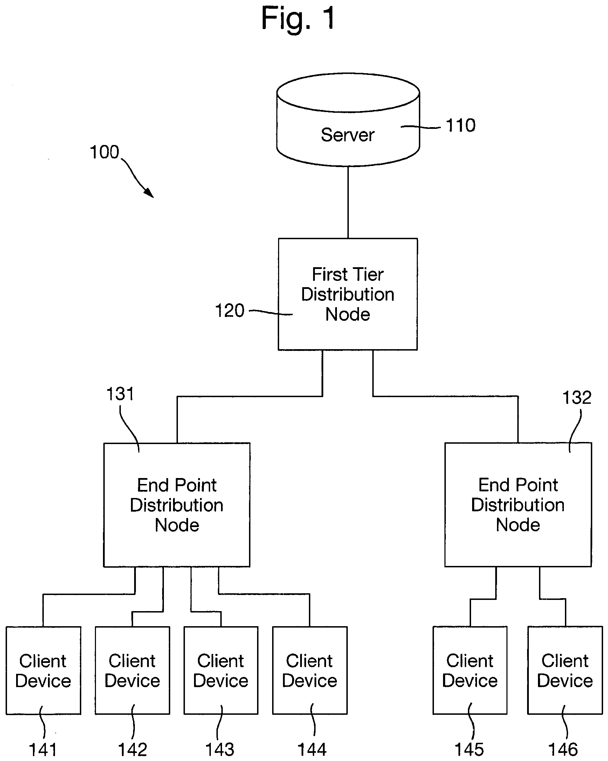

Figure 1 illustrates components of a content distribution network 100. The network 100 comprises a server 110, a first tier distribution node 120, a plurality of end point distribution nodes 131, 132, and a plurality of client devices 141 to 146. Server 110 communicates with the first tier distribution node 120. First tier distribution node 120 communicates with end point nodes 131 and 132, which in turn communicate with the client devices. End point distribution node 131 communicates with client devices 141, 142, 143 and 144. End point distribution node 132 communicates with client devices 145 and 146. Network 100 is a rudimentary example and in practice a content distribution network could have many more servers, many more nodes, many more tiers of nodes and many more client devices.

In operation, a client device such as client device 141 sends a request for content from server 110 via distribution nodes 131 and 120. The requested content is then served from server 110 to the client device 141, also via the distribution nodes 120 and 131.

The method disclosed herein may be preformed in the server 110, the first tier distribution node 120, or in either or both of the end point distribution nodes 131, 132.

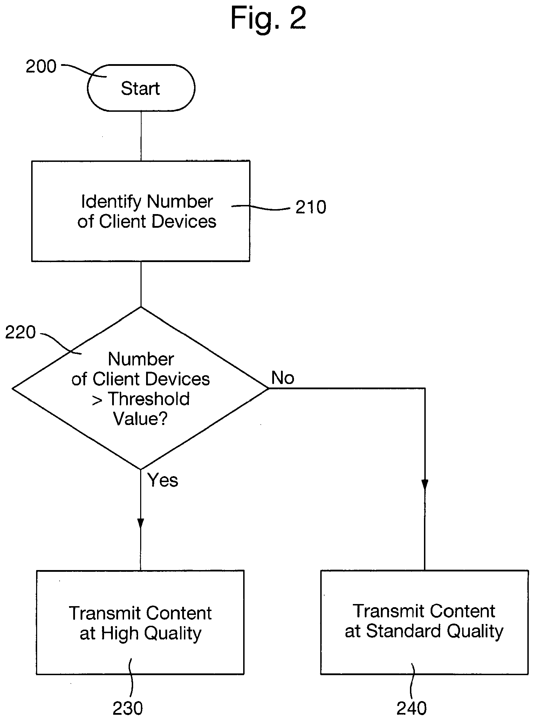

Figure 2 illustrates the method disclosed herein. This method may be performed in a node 300, the structure of which will be described below. The method starts at 200, and immediately proceeds to 210 where the number of client devices receiving a particular stream and that are under the node 300 is identified. At 220 a determination is made as to whether this number exceeds a threshold value. If the threshold value is exceeded, then the method proceeds to 230 where the quality of the particular stream that is sent to the client devices is increased. If, at 220, it is determined that the number of client devices under node 300 receiving a particular stream does not exceed the threshold value, then the method proceeds to 240 where the quality of the particular stream that is sent to the devices is maintained at a standard, or previously determined, quality.

In an alternative method, the node 300 identifies the number of client devices receiving a particular stream that are not necessarily under it but that are under another node in the network. For example, the method could be performed in first tier node 120 of figure 1, with reference to the client devices that are under the endpoint distribution node 131.

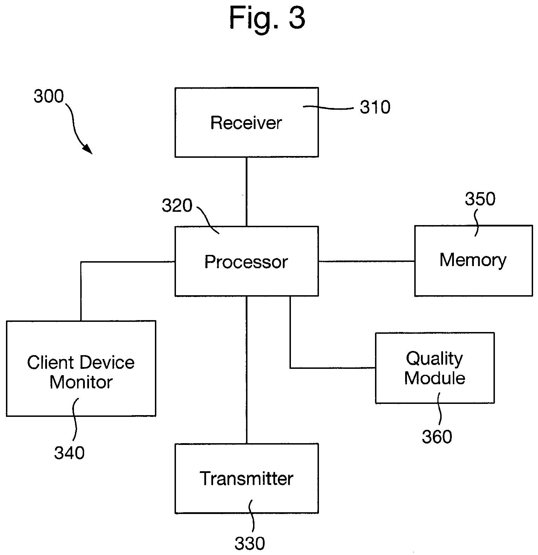

Figure 3 illustrates the structure of a distribution node 300 suitable for performing the method of figure 2. Distribution node 300 could take the place of a first tier distribution node 120 or either endpoint distribution nodes 131 and 132 shown in figure 1. Distribution node 300 comprises a receiver 310, a processor 320, a transmitter 330, a client device monitor 340, a memory 350, and a quality module 360. In operation, the receiver 310 and transmitter 330 provide the interface between the node and the other network components, allowing the node to receive communications from, and to send communications to, the other network components respectively.

The processor 320 is arranged to receive instructions which, when executed, causes the processor 320 to carry out the above described method. The instructions may be stored in memory 350.

The client device monitor 340 identifies the number of client devices receiving a particular stream and that are under the node 300 (or under another node in the network). The quality module 360 is arranged to increase the streamed quality of content when a plurality of clients greater than a threshold value stream the same content. The quality module does this be sending an instruction to the relevant content streaming server.

When a plurality of clients simultaneously stream the same content, the quality of that content stream can be increased, and thus the bandwidth it consumes also increased, without unduly using the network bandwidth. This is particularly applicable where one content stream at high quality consumes no more network traffic than two different content streams at a standard quality. In practice the relative bandwidth consumption of standard quality and high quality streams is set dependent on network topology and expected usage.

There are a plurality of ways of delivering content to client devices in a network, and as such there are a plurality of ways of achieving the above described functionality, some of which are described below.

In a basic content distribution system each client device can receive content streams at a standard quality; higher quality versions of the content streams can be made available by the server or a node in the network. When a particular node detects that a client device connects to a specific content stream, it reports it up the network to a node that has a client device monitor. The particular node initially receives the specific content stream at a standard quality. When the number of clients under the particular node and receiving the specific content stream reaches a specified limit, the particular node drops the standard quality stream and joins a higher quality stream. The higher quality stream is then routed by the particular node to the client devices watching the stream.

A more advanced content distribution system uses adaptive streaming to make content available to the client devices at different levels of quality, and with different bandwidth requirements. A manifest is sent from the server 110 to a client device 141 in response to a request for particular content, the manifest listing the quality versions of the content that are available from the server 110. Initially, when only a single client device receives the content stream, the manifest does not include the higher quality versions of the content. The manifest may be edited by the network node 300 or by the server 110. Once the node 300 detects that a client connects to a specific channel, it reports it up the network. When the number of clients under the node 300 watching the stream reaches a specified limit, the server edits the manifest file for the stream for the node 300, to allow a higher quality of the stream for the watching client devices

A practical example of the operation of the method and apparatus described herein will now be given, with reference to a streaming Channel X, and one node Y, which has multiple users under it. Node Y implements a plurality of thresholds and quality levels to allow finer control of the bandwidth and quality.

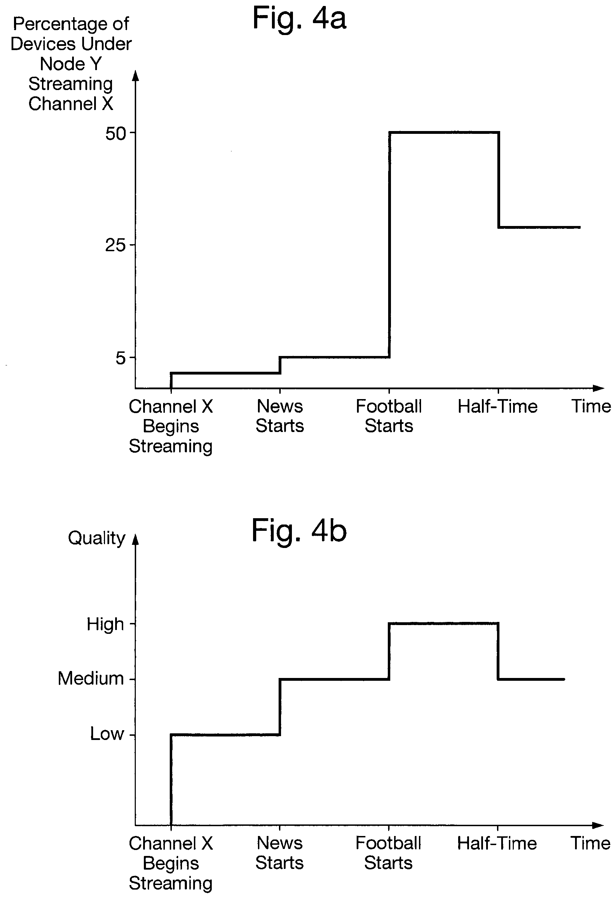

This practical example is illustrated by figures 4a and 4b. Figure 4a illustrates how the percentage of devices under node Y that are streaming Channel X varies with time with reference to various events over an evening. Figure 4b illustrates how the quality of stream of Channel X made available to users of node Y varies over the same evening.

Initially, channel X is not streamed by any client devices because it isn't transmitting. Channel X starts to broadcast and one user under node Y starts watching the channel. This means node Y must send a specific stream to the single user. This single stream is not an efficient use of node Y's available bandwidth and so node Y only allows the channel to stream in the lowest accepted quality defined for the stream. (Node Y allows this by editing the manifest or by communicating with the content server.)

Later on that same evening the evening news starts and the amount of users under node Y watching channel X increases to 5% of the client devices on this node. This is greater than a first threshold and the quality is increased from low to medium. Depending on the content distribution mechanism, the node will either rout out the medium quality content to the 5% of client devices, or it will make the medium quality version available to the 5% of client devices.

Even later on that evening, a big national football event starts, and 50% of the client devices under node Y start watching channel X. This is greater than a second threshold and the quality that is allowed is increased from medium to high.

By half-time the match is going bad, and many people stop watching the game, so the proportion of users under node Y watching channel X drops to 30%, which is below the second threshold and so channel X is now only made available from node Y at medium quality. The medium quality content stream of channel X is joined and routed by node Y, or the manifest is rewritten to only allow lower quality streaming.

The threshold(s) which cause changes in video quality for a particular node may be set as a total number of devices streaming the channel, a proportion of total devices, a proportion of active devices, or a proportion of devices streaming content. Different thresholds may be set for increasing and decreasing quality between two quality levels to give some degree of hysteresis, and to reduce quick switching between quality levels. Two, three or even more quality levels may be provided, with corresponding thresholds to define the switching between each.

It will be apparent to the skilled person that the exact order and content of the actions carried out in the method described herein may be altered according to the requirements of a particular set of execution parameters. Accordingly, the order in which actions are described and/or claimed is not to be construed as a strict limitation on order in which actions are to be performed.

While examples have been given in the context of HTTP Adaptive Streaming, these examples are not intended to be the limit of streaming system to which the disclosed method and apparatus may be applied. The principles disclosed herein can be applied to any streaming system which uses a description file. For example, this method and apparatus may be applied to Apple™ HTTP Live Streaming, and Microsoft™ Smooth Streaming.

Further, while examples have been given in the context of a particular communications network, these examples are not intended to be the limit of the communications networks to which the disclosed method and apparatus may be applied. The principles disclosed herein can be applied to any communications network which carries media using streaming, including both wired IP networks and wireless communications networks such as LTE and 3G networks.

## Claims

1. A node (300) in a content distribution network (100), the node (300) arranged to distribute content using multicast to a plurality of clients (141) in a multicast group, the node (300) comprising:
a client monitor (340) to identify a number of clients (141) in the multicast group that are streaming the same content; and
a quality module (360) arranged to increase a quality of the streamed content when the number of clients (141) greater than a threshold value stream the same content, **characterized in that**
the node (300) is arranged to increase the quality of the streamed content by making available an increased quality version of the streamed content by editing a manifest file for adaptive streaming.

2. The node (300) of claim 1, wherein the quality module (360) is further arranged to increase the quality of the streamed content by causing the node (300) to switch to a higher quality version of a content stream received at the node (300).

3. The node (300) of claim 1 or 2, wherein the quality module (360) is further arranged to send a report of the number of clients (141) streaming the same content.

4. The node (300) of any of the preceding claims 1-3, the node (300) further comprising a receiver (310) for receiving the content to be distributed to the plurality of clients (141).

5. The node (300) of any of the preceding claims 1-4, the node (300) further comprising a transmitter (330) for transmitting the content to the plurality of clients (141).

6. The node (300) of any of the preceding claims 1-5, wherein the node (300) is at least one of:
a streaming server;
a server connected to the streaming server; and
a base station of a wireless communications network.

7. A method, in a node (300) of a content distribution network (100), the node (300) arranged to distribute content using multicast to a plurality of clients (141) in a multicast group, the method comprising:
identifying (210) a number of clients (141) in the multicast group that are streaming the same content; and
increasing (230) a quality of the streamed content when the number of clients (141) greater than a threshold value stream the same content, **characterized in that**
the quality of the streamed content is increased (230) by making available an increased quality version of the streamed content by editing a manifest file for adaptive streaming.

8. The method of claim 7, wherein the increase (230) in the quality of streamed content is facilitated by the node (300) switching to a higher quality version of a content stream received by the node (300).

9. The method of claim 7 or 8, further comprising sending a report of the number of clients (141) streaming the same content.

10. The method of any of claims 7 to 9, the method further comprising, receiving the content to be distributed to the plurality of clients (141).

11. The method of any of claims 7 to 10, the method further comprising transmitting the content to the plurality of clients (141).

12. A computer-readable medium, carrying instructions, which, when executed by computer logic (320), causes said computer logic (320) to carry out any of the methods defined by claims 7 to 11.

## Patentansprüche

1. Knoten (300) in einem Inhaltverteilungsnetzwerk (100), wobei der Knoten (300) dazu ausgelegt ist, einen Inhalt unter Verwendung von Multicast an eine Vielzahl von Kunden (141) in einer Multicastgruppe zu verteilen, wobei der Knoten (300) Folgendes umfasst:
eine Kundenüberwachung (340), die eine Anzahl von Kunden (141) in der Multicastgruppe identifizieren soll, die denselben Inhalt streamen; und
ein Qualitätsmodul (360), das dazu ausgelegt ist, eine Qualität des gestreamten Inhalts zu erhöhen, wenn die Anzahl von Kunden (141), die größer ist als ein Schwellenwert, denselben Inhalt streamt,
**dadurch gekennzeichnet, dass**
der Knoten (300) dazu ausgelegt ist, die Qualität des gestreamten Inhalts durch ein Verfügbarmachen einer Version des gestreamten Inhalts mit einer erhöhten Qualität durch ein Bearbeiten einer Manifestdatei für adaptives Streaming zu erhöhen.

2. Knoten (300) nach Anspruch 1, wobei das Qualitätsmodul (360) ferner dazu ausgelegt ist, die Qualität des gestreamten Inhalts zu erhöhen, indem es den Knoten (300) dazu veranlasst, auf eine Version mit einer höheren Qualität eines Inhaltsstreams umzuschalten, der in dem Knoten (300) empfangen wird.

3. Knoten (300) nach Anspruch 1 oder 2, wobei das Qualitätsmodul (360) ferner dazu ausgelegt ist, eine Meldung der Anzahl von Kunden (141), die denselben Inhalt streamen, zu senden.

4. Knoten (300) nach einem der vorhergehenden Ansprüche 1-3, wobei der Knoten (300) ferner einen Empfänger (310) zum Empfangen des Inhalts, der an die Vielzahl von Kunden (141) verteilt werden soll, umfasst.

5. Knoten (300) nach einem der vorhergehenden Ansprüche 1-4, wobei der Knoten (300) ferner einen Transmitter (330) zum Übertragen des Inhalts an die Vielzahl von Kunden (141) umfasst.

6. Knoten (300) nach einem der vorhergehenden Ansprüche 1-5, wobei der Knoten (300) mindestens eines ist von:
einem Streamingserver;
einem Server, der mit einem Streamingserver verbunden ist; und
einer Basisstation eines drahtlosen Kommunikationsnetzwerks.

7. Verfahren in einem Knoten (300) eines Inhaltverteilungsnetzwerks (100), wobei der Knoten (300) dazu ausgelegt ist, einen Inhalt unter Verwendung von Multicast an eine Vielzahl von Kunden (141) in einer Multicastgruppe zu verteilen, wobei das Verfahren Folgendes umfasst:
Identifizieren (210) einer Anzahl von Kunden (141) in der Multicastgruppe, die denselben Inhalt streamen; und
Erhöhen (230) einer Qualität des gestreamten Inhalts, wenn die Anzahl von Kunden (141), die größer ist als ein Schwellenwert, denselben Inhalt streamt,
**dadurch gekennzeichnet, dass**
die Qualität des gestreamten Inhalts erhöht (230) wird, indem eine Version des Inhalts mit einer erhöhten Qualität durch ein Bearbeiten einer Manifestdatei für adaptives Streamen verfügbar gemacht wird.

8. Verfahren nach Anspruch 7, wobei das Erhöhen (230) der Qualität des gestreamten Inhalts dadurch erleichtert wird, dass der Knoten (300) auf eine Version mit einer höheren Qualität eines Inhalts umschaltet, der von dem Knoten (300) empfangen wird.

9. Verfahren nach Anspruch 7 oder 8, ferner umfassend ein Senden einer Meldung der Anzahl von Kunden (141), die denselben Inhalt streamen.

10. Verfahren nach einem der Ansprüche 7 bis 9, wobei das Verfahren ferner ein Empfangen des Inhalts umfasst, der an die Vielzahl von Kunden (141) verteilt werden soll.

11. Verfahren nach einem der Ansprüche 7 bis 10, wobei das Verfahren ferner ein Übertragen des Inhalts an die Vielzahl von Kunden (141) umfasst.

12. Computerlesbares Medium, das Anweisungen trägt, welche, wenn sie durch eine Computerlogik (320) ausgeführt werden, die Computerlogik (320) dazu veranlassen, jegliches der Verfahren, die durch die Ansprüche 7 bis 11 definiert sind, durchzuführen.

## Revendications

1. Noeud (300) d'un réseau de distribution de contenus (100), le noeud (300) étant agencé pour distribuer un contenu en utilisant une multidiffusion vers une pluralité de clients (141) dans un groupe de multidiffusion, le noeud (300) comprenant :
un dispositif de contrôle de clients (340) pour identifier un nombre de clients (141) dans le groupe de multidiffusion qui diffusent en continu le même contenu ; et
un module de qualité (360) agencé pour augmenter une qualité du contenu diffusé en contenu quand le nombre de clients (141) supérieur à une valeur de seuil diffusent en continu le même contenu,
**caractérisé en ce que**
le noeud (300) est agencé pour augmenter la qualité du contenu diffusé en continu en rendant disponible une version de qualité augmentée du contenu diffusé en continu en éditant un fichier manifeste pour une diffusion en continu adaptative.

2. Noeud (300) selon la revendication 1, dans lequel le module de qualité (360) est agencé en outre pour augmenter la qualité du contenu diffusé en continu en amenant le noeud (300) à commuter à une version de qualité supérieure d'un flux de contenu reçu au niveau du noeud (300).

3. Noeud (300) selon la revendication 1 ou 2, dans lequel le module de qualité (360) est agencé en outre pour envoyer un rapport du nombre de clients (141) diffusant en continu le même contenu.

4. Noeud (300) selon l'une quelconque des revendications précédentes 1 à 3, le noeud (300) comprenant en outre un récepteur (310) pour recevoir le contenu à distribuer à la pluralité de clients (141).

5. Noeud (300) selon l'une quelconque des revendications précédentes 1 à 4, le noeud (300) comprenant en outre un émetteur (330) pour transmette le contenu à la pluralité de clients (141).

6. Noeud (300) selon l'une quelconque des revendications précédentes 1 à 5, dans lequel le noeud (300) est au moins un parmi :
un serveur de diffusion en continu ;
un serveur connecté au serveur de diffusion en continu ; et
une station de base d'un réseau de communication sans fil.

7. Procédé, dans un noeud (300) d'un réseau de distribution de contenus (100), le noeud (300) étant agencé pour distribuer un contenu en utilisant une multidiffusion vers une pluralité de clients (141) dans un groupe de multidiffusion, le procédé comprenant :
l'identification (210) d'un nombre de clients (141) dans le groupe de multidiffusion qui diffusent en continu le même contenu ; et
l'augmentation (230) d'une qualité du contenu diffusé en contenu quand le nombre de clients (141) supérieur à une valeur de seuil diffusent en continu le même contenu,
**caractérisé en ce que**
la qualité du contenu diffusé en continu est augmentée (230) en rendant disponible une version de qualité augmentée du contenu diffusé en continu en éditant un fichier manifeste pour une diffusion en continu adaptative.

8. Procédé selon la revendication 7, dans lequel l'augmentation (230) de la qualité du contenu diffusé en continu est facilitée par le noeud (300) en commutant à une version de qualité supérieure d'un flux de contenu reçu par le noeud (300).

9. Procédé selon la revendication 7 ou 8, comprenant en outre l'envoi d'un rapport du nombre de clients (141) diffusant en continu le même contenu.

10. Procédé selon l'une quelconque des revendications 7 à 9, le procédé comprenant en outre la réception du contenu à distribuer à la pluralité de clients (141).

11. Procédé selon l'une quelconque des revendications 7 à 10, le procédé comprenant en outre la transmission du contenu à la pluralité de clients (141).

12. Support lisible par ordinateur, portant des instructions qui, quand elles sont exécutées par une logique informatique (320), amènent ladite logique informatique (320) à exécuter l'un quelconque des procédés selon les revendications 7 à 11.
